**Europäisches Patentamt**

**European Patent Office**

**Office européen des brevets**

(19)

(11) Veröffentlichungsnummer: **0 383 399**
**A2**

# (12) EUROPÄISCHE PATENTANMELDUNG

(21) Anmeldenummer: **90200328.4**

(22) Anmeldetag: **13.02.90**

(51) Int. Cl.⁵: **G02F 1/095**

(30) Priorität: **16.02.89 DE 3904660**

(43) Veröffentlichungstag der Anmeldung:
**22.08.90 Patentblatt 90/34**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Schmitt, Hans-Jürgen, Prof.**
**Hangstrasse 34**
**D-5100 Aachen(DE)**

Erfinder: **Seidenberg, Jürgen**
**Wildbacher Mühle 53**
**D-5100 Aachen(DE)**
Erfinder: **Thorweihe, Norbert**
**Deliusstrasse 1**
**D-5100 Aachen(DE)**
Erfinder: **Dammann, Hans, Dr.**
**Eichenstrasse 27**
**D-2081 Tangstedt(DE)**
Erfinder: **Doormann, Volker**
**Borchertring 27**
**D-2000 Hamburg 60(DE)**
Erfinder: **Krumme, Jens-Peter, Dr.**
**Sülldorfer Heideweg 4**
**D-2000 Hamburg 55(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Planarer optischer Isolator.**

(57) Die Erfindung betrifft einen planaren optischen Isolator mit einer magnetooptischen gyrotropen Schicht und einer anisotropen doppelbrechenden Schicht, welche derart dimensioniert sind, daß die unter Einwirkung eines Magnetfeldes entstehende nichtreziproke Polarisationsdrehung des Lichts (Faraday-Effekt) in Durchlaßrichtung des Isolators zumindest annähernd negativ gleich der reziproken Polarisationsdrehung infolge der Doppelbrechung ist, so daß eine TE-Mode in Durchlaßrichtung dämpfungsarm geführt ist, wobei Maßnahmen zur intensiven Abschwächung mindestens einer TM-Mode vorgesehen sind. Ein Isolator mit hoher Isolierwirkung, bei welchem magnetooptische gyrotrope Schichten und anisotrope doppelbrechende Schichten epitaxial verbindbar sind, ergibt sich dadurch, daß die wellenleitende Kernschicht aus zwei zur Erzielung unterschiedlicher spezifischer Doppelbrechung verschieden dotierten Seltenerd-Eisen-Granat (YIG)-Schichten besteht.

| | |
|---|---|
| 8 | |
| 7 Au | |
| 6 $Gd_{2.34}La_{0.44}Bi_{0.22}Fe_3Ga_2O_{12}$ | |
| 5 $Gd_2Bi_1Fe_{4.6}Ga_{0.3}Al_{0.3}O_{12}$ | |
| 4 $La_2Bi_1Fe_{4.6}Ga_{0.3}Al_{0.3}O_{12}$ | |
| 3 $Y_3Fe_5O_{12}$ | |
| 2 $Y_3(Fe,Co)_5O_{12}$ | |
| 1 $Gd_3Ga_5O_{12}$ | |

FIG.1

**Planarer optischer Isolator**

Die Erfindung bezieht sich auf einen planaren optischen Isolator mit einer magnetooptischen gyrotropen Schicht und einer anisotropen doppelbrechenden Schicht, welche derart dimensioniert sind, daß die unter Einwirkung eines Magnetfeldes entstehende nichtreziproke Polarisationsdrehung des Lichts (Faraday-Effekt) in Durchlaßrichtung des Isolators zumindest annähernd negativ gleich der reziproken Polarisationsdrehung infolge der Doppelbrechung ist, so daß eine TE-Mode in Durchlaßrichtung dämpfungsarm geführt ist, wobei Maßnahmen zur intensiven Abschwächung mindestens einer TM-Mode vorgesehen sind.

Dabei handelt es sich um Isolatoren, bei welchen die Funktionen eines nichtreziproken Polarisationsdrehers, eines reziproken Polarisationsdrehers und von Polarisatoren in einem einzigen Bauelement vereinigt sind. Die Polarisationsebene des Lichts (TE-Mode) wird in Durchlaßrichtung nicht verändert. Es ergeben sich kompakte und relativ kurze (ca. 10 mm) Bauelemente.

Eine relativ starke nichtreziproke Polarisationsdrehung ermöglichen gyrotrope, optisch dämpfungsarme und magnetooptische YIG-Kristallschichten eines Streifenwellenleiters. Im allgemeinen spricht man auch dann von YIG-Schichten, wenn Yttrium teilweise oder ganz durch andere Seltenerd-Elemente substituiert wurde.

Die reziproke Polarisationsdrehung, welche in Durchlaßrichtung und in Sperrichtung des Polarisators mit gleicher Drehrichtung erfolgt, erreicht man durch anisotrope doppelbrechende Eigenschaften von Wellenleiterschichten.

Für eine vorgegebene Wellenlänge des Lichts lassen sich die Streifenwellenleiter hinsichtlich ihrer magnetooptischen und doppelbrechenden Eigenschaften so dimensionieren, daß in Durchlaßrichtung die nichtreziproke und die reziproke Polarisationsdrehung negativ gleich sind. Z.B wird dann eine senkrecht zur Schichtebene schwingende TE-Mode ohne Polarisationsdrehung durch den Isolator geleitet. In Sperrichtung wird dagegen diese TE-Mode zunehmend in eine senkrecht dazu schwingende TM-Mode umgewandelt, da in dieser Richtung die reziproke und die nichtreziproke Phasendrehung gleichsinnig unterstützend wirken.

Beim durch IEEE-Journal of Quantum Electronics 1982, Seiten 1975 bis 1981 bekannten Isolator, bei welchem eine isotrope magnetooptische Wellenleiterschicht zwischen Mantelschichten aus einem isotropen Substrat und einer anisotropen doppelbrechenden Kristallschicht angeordnet ist, sind an den Enden des Isolators metallische Schichten vorgesehen, welche eine polarisierende Wirkung ausüben, indem sie nur die TM-Moden selektiv abdämpfen. Die Baulänge dieses bekannten Isolators muß derart abgestimmt sein, daß auf dem Rückweg eine vollständige Umwandlung z.B. einer TE-Mode in eine TM-Mode erfolgt ist. Das wird durch Überlagerung einer Faraday-Drehung um 45° und einer von der Doppelbrechung verursachten Drehung um 45° erreicht. Die TM-Mode wird schließlich durch den Metallstreifen abgedämpft, so daß im Endergebnis in Sperrichtung praktisch kein Licht aus dem Isolator austritt. Außer einer genauen Phasenanpassung ($\Delta\beta$ = 0) der TM- und TE-Moden zur Gewährleistung gleicher Ausbreitungsgeschwindigkeiten ist für eine brauchbare Isolierwirkung dieses sogenannten 45° - Wellenleiter-Isolators eine sorgfältige Längenabstimmung erforderlich. Darüberhinaus bereitet es Schwierigkeiten, stark doppelbrechende Schichtmaterialien mit einer magnetooptischen Schicht innig zu verbinden. Diese letztgenannte Schwierigkeit besteht auch bei einem nach J.Appl.Phys. 1981, Seiten 3190 bis 3199 bekannten Isolator, bei welchem eine $LiNbO_3$-Schicht mit einer YIG-Schicht verbunden werden muß. Die Isolationswirkung dieses bekannten Isolators ergibt sich durch Umwandlung einer rücklaufenden TE-Mode in eine abstrahlende TM-Mode. Experimentell wurden Isolierwirkungen von nur 10 db erreicht, weil vermutlich trotz einer Selen-Zwischenlage kein genügend inniger optischer Kontakt der YIG-Schicht mit der $LiNbO_3$-Schicht erreicht wurde, und weil andererseits die theoretisch postulierte Abstrahlung von TM-Moden an sich nur bei einer unendlich dicken $LiNbO_3$-Schicht vollständig möglich ist.

Der Erfindung liegt die Aufgabe zugrunde, einen Isolator der eingangs genannten Art zu schaffen, bei welchem magnetooptische gyrotrope Schichten und anisotrope doppelbrechende Schichten epitaxial verbindbar sind und welcher eine hohe Isolierwirkung aufweist.

Die Lösung gelingt dadurch, daß die wellenleitende Kernschicht aus zwei zur Erzielung unterschiedlicher spezifischer Doppelbrechung verschieden dotierten Seltenerd-Eisen-Granat (YIG)-Schichten besteht.

Wenn erfindungsgemäß die wellenleitende Kernschicht aus zwei magnetooptischen Teilschichten besteht, die hinsichtlich ihrer doppelbrechenden Eigenschaften unterschiedlich sind, so gelingt es trotz der relativ schwachen spannungsinduzierten Doppelbrechung von YIG-Schichten sowohl die erforderliche Phasenanpassung ($\Delta\beta$ = 0) einer TE-Grundmode und einer TM-Grundmode zu erreichen als auch die Gleichheit der reziproken und der nichtreziproken Polarisationsdrehungen. Durch unterschiedliche Dotierungen der Teilschichten lassen sich verschiedene Gitterkonstanten einstellen, so daß in der zweiten Teilschicht bei derem epitaxialem Aufwachsen eine mechanische Spannung entsteht, welche besonders auf GGG-Substrat mit (110) Kristallorientierung eine Anisotropie und die gewünschte Doppelbrechung zur Folge hat. Im Vergleich zum Aufwachsen aus der Flüssigphase bietet ein Aufwachsen der zweiten Teilschicht durch Sputtern den Vorteil, daß größere Unterschiede der Gitterkonstanten zugelassen werden können und damit eine höhere mechanische Spannung und größere Doppelbrechung resultieren. Die Unterschiede der Gitterkonstanten sind bevorzugt so zu wählen, daß sich Druckspannungen ergeben, weil unter Zugspannungen schnell die Zerreißgrenze des Granat erreicht wird.

Ein einfaches Ausführungsbeispiel ist dadurch gekennzeichnet, daß die erste YIG-Teilschicht isotrop und die zweite YIG-Teilschicht anisotrop ist. Dabei ist eine Anisotropie nur für eine der beiden magnetooptischen Teilschichten vorgesehen.

Ein hinsichtlich der reziproken Polarisationsdrehung besonders wirkungsvoller Schichtaufbau ist dadurch gekennzeichnet, daß beide YIG-Teilschichten in der Weise unterschiedlich anisotrop sind, daß deren reziproke Drehwirkungen mit unterschiedlichem Drehwinkel-Vorzeichen erfolgen. Beispielsweise kann die erste Teilschicht auf einer Grundschicht mit solchem Unterschied der Gitterkonstante aufgewachsen sein, daß sich Zugspannungen einstellen, während die zweite Teilschicht eine derart unterschiedliche Gitterkonstante gegenüber der ersten Teilschicht aufweist, daß in ihr eine Druckspannung entsteht.

Die Abschwächung insbesondere einer TM-Grundmode ist besonders wirkungsvoll mittels einer elektrisch gut leitfähigen Deckschicht möglich, welche vorzugsweise eine Metallschicht, insbesondere eine Goldschicht ist. Eine solche selektiv TM-Moden absorbierende Metallschicht ist kontinuierlich als Deckschicht über dem gesamten Wellenleiter aufgebracht. Dadurch wird der in eine TM-Mode umgewandelte Teil einer in Sperrichtung eingeleiteten TE-Mode sofort und kontinuierlich über die Isolatorlänge absorbiert. Die Funktion des erfindungsgemäßen Isolators ist längenunabhängig, wobei die in dB gemessene Dämpfung in Sperrichtung seiner Länge proportional ist.

Damit eine TE-Mode in Durchlaßrichtung möglichst wenig durch die Metallschicht abgeschwächt wird, ist vorgesehen, daß zwischen der wellenleitenden Kernschicht und der Metallschicht eine optisch dämpfungsarme Pufferschicht angeordnet ist, deren Brechungsindex kleiner als derjenige der benachbarten Kernschicht ist.

Zur Abdämpfung höherer Moden, insbesondere bei geringen Brechungsindexunterschieden zwischen den wellenleitenden Kernschichten und benachbarten Mantelschichten, ist es vorteilhaft, daß über einer Mantelschicht eine Absorptionsschicht angeordnet ist, welche eine hohe optische Dämpfung aufweist.

Sämtliche Wellenleiterschichten eines erfindungsgemäßen Isolators lassen sich zur Bildung monolithischer Elemente aus entsprechend dotierten YIG-Schichten herstellen (wobei Yttrium teilweise oder ganz durch andere Seltenerd-Elemente ersetzt sein kann), die aufeinanderfolgend auf einem bevorzugt in (110) orientierten GGG-Substrat aufgebracht werden.

Eine besonders einfache Ausführung eines eingangs genannten Isolators zur Lösung der eingangs genannten Aufgabe ist dadurch gekennzeichnet, daß der Isolator aus folgenden nacheinander auf ein (110)-orientiertes GGG-Substrat epitaxial aufgewachsenen Schichten aufgebaut ist:
- YIG-Absorberschicht mit hoher Dämpfung
- anisotrope YIG-Claddingschicht mit niedriger optischer Dämpfung
- wellenleitende, gyrotrope und isotrope YIG-Schicht mit gegenüber der Claddingschicht erhöhtem Brechungsindex
- Luft,
wobei die Dicken und die Elemente des Dielektizitätstensors der Absorberschicht, der Claddingschicht und der wellenleitenden Schicht derart bemessen sind, daß die $TE_0$-Grundmode in Durchlaßrichtung verlustarm führbar ist und in Sperrichtung in die $TM_1$-Mode umgewandelt wird, und daß die optischen Dämpfungen für sämtliche führbaren Moden, insbesondere für die $TM_1$-Mode, wesentlich größer als die Dämpfung für die TE-Grundmode sind, und daß die Phasenkonstanten von $TE_0$-Grundmode und $TM_1$-Mode etwa gleich sind.

Bei dieser Ausführung kann auf eine Metallschicht und Aufteilung der wellenleitenden Schicht in zwei Teilschichten verzichtet werden. Die $TE_0$-Grundmode wird in Durchlaßrichtung infolge Gegenkompensation der reziproken und nichtreziproken Polarisationsdrehungen mit gleichbleibender Schwingungsebene praktisch ohne Dämpfung hindurchgelassen. Eine in Sperrichtung rückgestrahlte $TE_0$-Grundmode wird in eine $TM_1$-Mode umgewandelt, welche durch die hoch absorbierende Claddingschicht abgedämpft wird.

Bei dieser vereinfachten Ausführungsart ist es erforderlich, die Schichtdicken sehr genau einzuhalten, da sonst unzulässige Abweichungen der Phasenanpassung der $TM_0$-Grundmode und der $TM_1$-Mode entstehen.

Die Erfindung wird anhand der Zeichnung näher erläutert:
Fig. 1 zeigt ein Ausführungsbeispiel eines erfindungsgemäß bemessenen Isolators
Fig. 2 zeigt eine besonders einfache Ausführungsform eines erfindungsgemäßen Isolators
Die für einen Isolator bedeutsamen Eigenschaften wellenleitender Schichten werden durch den

Dielektrizitäts-Tensor $\epsilon$ beschrieben:

$$\mathcal{E} = \begin{pmatrix} \mathcal{E}_{xx} & \mathcal{E}_{xy} & \mathcal{E}_{xz} \\ \mathcal{E}_{yx} & \mathcal{E}_{yy} & \mathcal{E}_{yz} \\ \mathcal{E}_{zx} & \mathcal{E}_{zy} & \mathcal{E}_{zz} \end{pmatrix}$$

Dabei liegt folgendes Koordinatensystem zugrunde:

z: Durchlaßrichtung des Isolators

y: senkrecht zur Durchlaßrichtung in der Schichtebene

x: senkrecht zur Schichtebene

Statt der komplexen Tensorelemente $\epsilon_{xx}$, $\epsilon_{yy}$, $\epsilon_{zz}$ in den Richtungen der Koordinaten x, y und z werden infolge gemäß der Beziehung $n^2 = \epsilon$ die entsprechenden komplexen Brechungsindizes $n_{xx}$, $n_{yy}$ und $n_{zz}$ angegeben, deren Imaginärteil ein Maß für die optische Absorption der Schichtstoffe ist.

Der Imaginärteil der Nebendiagonalelemente $\epsilon_{xy} = -\epsilon_{yx}$ ist ein Maß für die Faraday-Drehung unter Einwirkung eines in z-Richtung aufgebrachten Magnetfeldes.

Der Realteil der Elemente $\epsilon_{yz} = \epsilon_{zy}$ ist ein Maß für die Doppelbrechung optisch anisotroper Schichten.

Für das Verhalten mehrschichtiger Wellenleiter sind natürlich auch die Dicken d der einzelnen Schichten maßgebend. Bei Kenntnis der Dielektrizitäts-Tensoren der einzelnen Schichten und ihrer Dicken d läßt sich für eine bestimmte Wellenlänge des Lichts das optische Verhalten eines mehrschichtigen Wellenleiters auf der Grundlage der Maxwellschen Gleichungen ermitteln. Entsprechende Rechenverfahren sind beispielsweise in IEEE Journ. of Quantum Electronics 1982, Seiten 1975 bis 1981, angewendet.

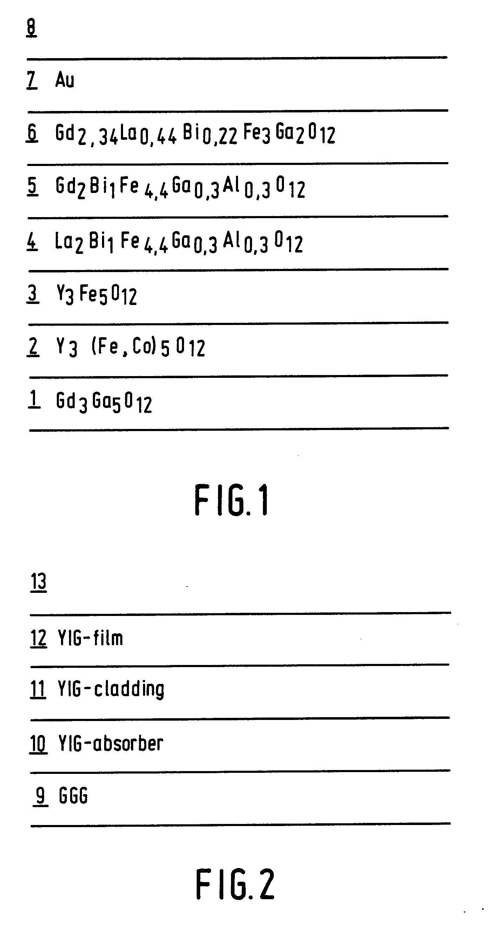

Der in Fig. 1 angedeutete erfindungsgemäße und für eine Wellenlänge $\lambda = 1300$ bemessene Isolator weist sieben Schichten auf:

Das GGG-Substrat 1 besteht aus Gadolinium-Gallium-Granat mit einer Gitterkonstanten von 12,38 Å und mit einem Brechungsindex von n = 1,945 in allen Koordinatenrichtungen. Es ist vorteilhaft in (110)-Orientierung geschnitten.

Die Absorberschicht 2, die Cladding-Schicht 3, die wellenleitende Teilschicht 4 und die wellenleitende Schicht 5, sowie die Pufferschicht 6 bestehen aus unterschiedlich substituierten sogenannten YIG-Schichten. Durch in bekannter Weise geeignete Substitutionselemente werden die Gitterkonstanten und/oder die Brechungsindizes und/oder die Faraday-Drehung der Schichten in gewünschter Weise beeinflußt. Chemische Formeln der für das Ausführungsbeispiel geeigneten einzelnen Schichten sind in Fig. 1 eingetragen.

Die isotrope Goldschicht 7 mit der Dicke $d_7 = 1,00$ $\mu$m hat in allen Koordinatenrichtungen den Brechungsindex n = 0,69 - i 7,26. Darüber befindet sich Luft 8 mit dem Brechungsindex n = 1.

Die YIG-Pufferschicht 6 mit der Gitterkonstanten 12,50 Å hat eine Dicke von $d_6 = 0,80$ $\mu$m. Ihre dielektrischen Kenndaten sind:

$nxx = 2,112 - i1,2 \times 10^{-6}$

$nyy = nzz = 2,1 - i1,2 \times 10^{-6}$

$\epsilon xy = i0,000625$

$\epsilon yz = 0,0092$

Die anisotrope wellenleitende YIG-Teilschicht 5 mit der Gitterkonstanten 12,50 Å ist 0,32 $\mu$m dick. Ihre dielektrischen Kennwerte sind:

$nxx = 2,322 - i1,2 \times 10^{-6}$

$nyy = nzz = 2,3 - i1,2 \times 10^{-6}$

$\epsilon xy = i0,000625$

$\epsilon yz = 0,0092$

Die isoptrope wellenleitende Schicht 4 mit der Gitterkonstanten 12,38 Å ist 0,30 $\mu$m dick und hat folgende dielektrischen Kennwerte:

$n = 2,322 - i1,2 \times 10^{-6}$

$\epsilon xy = i0,000625$

Die YIG-Claddingschicht 3 mit der Gitterkonstanten 12,38 Å ist 2,00 $\mu$m dick und hat folgende dielektrischen Kenndaten:

$n = 2,200 - i1,2 \times 10^{-6}$

$\epsilon_{xy} = i0,000625$

Die YIG-Absorberschicht 2 mit der Gitterkonstanten 12,38 Å ist 4,00 μm dick. Ihre dielektrischen Kennwerte sind:

$n = 2,200 - i0,001$

Die Schichten 2 bis 7 können aufeinanderfolgend epitaxial aufgebracht werden. Da die wellenleitende Schicht 5 auf eine wellenleitende Schicht 4 aufgebracht wird, welche eine niedrigere Gitterkonstante hat, entstehen in ihr und ebenso in der YIG-Pufferschicht 6 Druckspannungen, welche für die Entstehung der Doppelbrechung ($\epsilon_{yz} = 0,0092$) verantwortlich sind. Der Wert von $\epsilon_{yz}$ ist am größten, wenn das Substrat die kristallographische (110)-Orientierung aufweist.

Die Schichten 2 bis 6 können aus der Flüssigphase oder auch durch Sputtern epitaxial aufgewachsen werden. Die Schicht 5 sollte jedoch vorteilhaft durch Sputtern aufgebracht werden, weil dieses Verfahren auch bei größerem Unterschied der Gitterkonstante von Schicht 4 und 5 gut geeignet ist.

Das Ausführungsbeispiel nach Figur 1 stellt eine spezielle Realisierungsmöglichkeit der erfindungsgemäßen Lehre dar. Die dielektrischen Kennwerte der einzelnen Schichten können jedoch auch durch andersartige Substitutionen erreicht werden. Die Verwendung von YIG als Basismaterial bietet sich an, weil GGG-Substrate kommerziell erhältlich sind, e.g. für Bubble-Speicher.

Auch die Dielektrizitäts-Tensoren und Dicken d der einzelnen Schichten können relativ zueinander abgewandelt werden, um bei gegebener Wellenlänge des Lichts folgende Bedingungen zu erfüllen:
- Phasenanpassung ($\Delta \beta \approx 0$) zwischen den ineinander konvertierbaren TM- und TE-Moden,
- Einmodigkeit (Nichtführbarkeit und/oder Absorption höherer Moden)
- besonders hohe Abschwächung der TM-Grundmode durch selektive Absorption (insbesondere durch eine Metallschicht)
- Angleichung der Beträge der reziproken und nichtreziproken Polarisationsdrehungen bzw. Modentransformationen der konvertierbaren TE- und TM-Moden.

Herzstück der Isolatorstruktur nach Figur 1 ist der in einen isotropen und anisotropen Film aufgeteilte wellenleitende Kern, der die TE - und TM-Mode führt und der durch die Lage der Grenzfläche zwischen den Teilschichten 4 und 5 ein besonders großes Überlappintegral des $E_y$-und $E_z$-Feldes zur Folge hat, wodurch für gegebene Werte von $\epsilon_{yz}$ die durch den anisotropen Film 1 bewirkte reziproke Kopplung zwischen der TE- und der TM-Grundmode besonders groß wird. Die anisotrope Pufferschicht 6 verstärkt diesen Kopplungseffekt weiter, da das $E_z$-Feld dort fast überall dasselbe Vorzeichen hat wie in der Schicht 5. Darüberhinaus bewirkt der Puffer eine optimale Anpassung des Feldes der TM-Mode an die oben aufliegende Goldschicht, wodurch die TM-Grundmode und alle höheren TM-Moden wirksam weggedämpft werden, ohne die TE-Grundmode wesentlich zu stören. Auf der anderen Seite des Schichtpakets trennt eine Claddingschicht 3 (Mantel) die TE-Grundmode vom Eindringen in den alle höheren TE-Moden wegdämpfenden Absorber (2). Man erhält damit einen einmodigen Wellenleiter mit auch bei Toleranzabweichungen der Schichtdicken hinreichend genauer Phasenanpassung der TE- und TM-Grundmoden. Nur die TE-Grundmode wird praktisch ungedämpft geführt, während die TM-Grundmode und alle höheren TE- und TM-Moden absorbiert werden. Darüberhinaus ist der reziproke Kopplungseffekt so verteilt, daß nahezu nur Beiträge gleichen Vorzeichens im Überlappintegral der $E_y$- und $E_z$-Felder auftreten, so daß sich für gegebenes $\epsilon_{yz}$ eine maximale Modenkonversion ergibt.

Für die Ausbreitungsdämpfungen (dB/mm) im Beispiel Fig. 1 ergeben sich etwa folgende Werte:

| Grundmode: | TE | TM |
|---|---|---|
| vorwärts | 0.1 | 16.5 |
| rückwärts | 7.7 | 8.9 |

Bei einer Länge von z.B. 1 cm hat man also eine Isolation von ca. 80 dB bei einer Vorwärtsdämpfung von nur 1 dB. Entwurfstypisch ist, daß die Dicken mit zunehmenden Indexsprüngen kleiner werden. Die vorteilhafte Werte der Überlappintegrale ermöglichenden Feldverteilungen sind ein entscheidendes Kriterium für die Bemessung der Schichtdicken.

Beim in Fig. 2 angedeuteten Isolator ist folgender Schichtaufbau gegeben:
- GGG Substratschicht 9
- YIG-Absorberschicht 10 mit einer Dicke $d_{10} = 5$ μm und folgenden dielektrischen Kennwerten:

5

n = 2,300 - i0,002

- YIG-Claddingschicht 11 mit einer Dicke $d_{11}$ = 3,8 µm und folgenden dielektrischen Kennwerten:

$n_{xx}$ = 2,312 - i1,2x10$^{-6}$

$n_{yy}$ = $n_{zz}$ = 2,3 - i1,2x10$^{-6}$

$\epsilon_{xy}$ = i0,0005

$\epsilon_{yz}$ = 0,0092

- wellenleitende Kern-YIG-Schicht 12 mit einer Dicke von $d_{12}$ = 2,14 µm und folgenden dielektrischen Kennwerten:

n = 2,314 - i1,2x10$^{-6}$

$\epsilon_{xy}$ = i0,0005

- Luftschicht (Dicke $\infty$ ) mit n = 1.

Auch diese Struktur stellt einen Polarisator für $\lambda$ = 1300 nm dar, der nur die TE$_0$-Grundmode in Vorwärtsrichtung nahezu ungedämpft (0.2 dB/mm) durchläßt. Höhere TE- und alle TM-Moden werden stärker gedämpft. Phasenanpassung ist für die TE$_0$-Grundmode und die TM$_1$-Mode gewährleistet. Die TM$_1$ Mode wird mit 8,6 dB/mm (vorwärts) und 4,4 (rückwärts) ausreichend gedämpft. Das Überlappintegral zwischen Ey (TE-Grundmode) und E$_z$ (TM$_1$)-Feld ist für ausreichende reziproke Modenkopplung genügend groß. Das Konstruktionsprinzip dieses Isolators umfaßt die Kombination eines isotropen Kerns mit einem anisotropen Mantel. Dadurch wird einerseits eine wirksame reziproke TE$_0$/TM$_1$-Modenkopplung erzielt, andererseits auch die TM$_0$-Grundmode genügend durch den Absorber abgedämpft. Ein Nachteil dieser sehr einfachen Ausführung ist, daß anders als beim Beispiel nach Fig. 1 eine genügend genaue Phasenanpassung nur sehr geringe Schwankungen der Schichtdicke $d_{12}$ um einen kritischen Wert zuläßt.

### Ansprüche

1. Planarer optischer Isolator mit einer magnetooptischen gyrotropen Schicht und einer anisotropen doppelbrechenden Schicht, welche derart dimensioniert sind, daß die unter Einwirkung eines Magnetfeldes entstehende nichtreziproke Polarisationsdrehung des Lichts (Faraday-Effekt) in Durchlaßrichtung des Isolators zumindest annähernd negativ gleich der reziproken Polarisationsdrehung infolge der Doppelbrechung ist, so daß eine TE-Mode in Durchlaßrichtung dämpfungsarm geführt ist, wobei Maßnahmen zur intensiven Abschwächung mindestens einer TM-Mode vorgesehen sind,
dadurch gekennzeichnet, daß die wellenleitende Kernschicht aus zwei zur Erzielung unterschiedlicher spezifischer Doppelbrechung verschieden dotierten Seltenerd-Eisen-Granat (YIG)-Schichten besteht.

2. Isolator nach Anspruch 1,
dadurch gekennzeichnet, daß mindestens eine der YIG-Teilschichten durch Sputtern auf die andere aufgebracht ist.

3. Isolator nach Anspruch 1 oder 2,
dadurch gekennzeichnet, daß die Gitterkonstanten der YIG-Teilschichten verschieden sind.

4. Isolator nach einem der Ansprüche 1 bis 3,
dadurch gekennzeichnet, daß die erste YIG-Teilschicht isotrop und die zweite YIG-Teilschicht anisotrop ist.

5. Isolator nach einem der Ansprüche 1 bis 4,
dadurch gekennzeichnet, daß beide YIG-Teilschichten in der Weise unterschiedlich anisotrop sind, daß deren reziproke Drehwirkungen mit unterschiedlichem Drehwinkel-Vorzeichen erfolgen.

6. Isolator nach einem der Ansprüche 1 bis 5,
dadurch gekennzeichnet, daß er mit einer elektrisch gut leitfähigen Deckschicht versehen ist.

7. Isolator nach Anspruch 6,
dadurch gekennzeichnet, daß die elektrisch gut leitfähige Schicht eine Metallschicht, insbesondere Goldschicht ist.

8. Isolator nach Anspruch 7,
dadurch gekennzeichnet, daß zwischen der wellenleitenden Kernschicht und der Metallschicht eine optisch dämpfungsarme Pufferschicht angeordnet ist, deren Brechungsindex kleiner als derjenige der benachbarten Kernschicht ist.

9. Isolator nach einem der Ansprüche 1 bis 8,
dadurch gekennzeichnet, daß die Kernschicht auf einer einen niedrigeren Brechungsindex aufweisenden optisch dämpfungsarmen Mantelschicht aufliegt.

10. Isolator nach Anspruch 9,
dadurch gekennzeichnet, daß die Mantelschicht zwischen der Kernschicht und einer optisch mit hoher Dämpfung leitenden Absorptionsschicht angeordnet ist.

11. Isolator nach einem der Ansprüche 1 bis 10,
dadurch gekennzeichnet, daß er aus auf ein bevorzugt in (110) geschnittenen GGG-Substrat aufeinanderfolgend epitaxial aufgewachsenen YIG-Schichten besteht, auf welche abschließend gegebenenfalls eine metallische Deckschicht aufgebracht ist.

12. Planarer optischer Isolator mit einer magnetooptischen gyrotropen Schicht und einer anisotropen doppelbrechenden Schicht, welche derart dimensioniert sind, daß die unter Einwirkung eines Magnetfeldes entstehende nichtreziproke Polarisationsdrehung des Lichts (Faraday-Effekt) in Durchlaßrichtung des Isolators zumindest annähernd negativ gleich der reziproken Polarisationsdrehung infolge der Doppelbrechung ist, so daß eine TE-Mode in Durchlaßrichtung dämpfungsarm geführt ist, wobei Maßnahmen zur intensiven Abschwächung mindestens einer TM-Mode vorgesehen sind,
dadurch gekennzeichnet, daß der Isolator aus folgenden nacheinander auf ein bevorzugt in (110) geschnittenes GGG-Substrat epitaxial aufgewachsenen Schichten aufgebaut ist:
- YIG-Absorberschicht mit hoher Dämpfung
- anisotrope YIG-Claddingschicht mit niedriger optischer Dämpfung
- wellenleitende, gyrotrope und isotrope YIG-Schicht mit gegenüber der Claddingschicht erhöhtem Brechungsindex
- Luft,
wobei die Dicken und die $\epsilon$-Tensoren der Dielektrizitätskonstanten der Absorberschicht, der Claddingschicht und der wellenleitenden Schicht derart bemessen sind, daß die $TE_0$-Grundmode in Durchlaßrichtung verlustarm führbar und in Sperrichtung in die $TM_1$-Mode umgewandelt wird, und daß die optischen Dämpfungen für sämtliche führbaren Moden, insbesondere für die $TM_1$-Mode, wesentlich größer als die Dämpfung für die $TE_0$-Grundmode sind, und daß die Phasenkonstanten der $TE_0$-Grundmode und der $TM_1$-Mode etwa gleich sind.

8

7 Au

6 $Gd_{2,34}La_{0,44}Bi_{0,22}Fe_3Ga_2O_{12}$

5 $Gd_2Bi_1Fe_{4,4}Ga_{0,3}Al_{0,3}O_{12}$

4 $La_2Bi_1Fe_{4,4}Ga_{0,3}Al_{0,3}O_{12}$

3 $Y_3Fe_5O_{12}$

2 $Y_3(Fe,Co)_5O_{12}$

1 $Gd_3Ga_5O_{12}$

# FIG.1

13

12 YIG-film

11 YIG-cladding

10 YIG-absorber

9 GGG

# FIG.2

PHD 89-020